Europäisches Patentamt

European Patent Office

Office européen des brevets

(19)

(11)  EP 0 533 220 B1

(12)  **EUROPÄISCHE PATENTSCHRIFT**

(45) Veröffentlichungstag und Bekanntmachung des Hinweises auf die Patenterteilung:
**17.04.1996  Patentblatt 1996/16**

(51) Int Cl.$^6$: **G01S 13/18**

(21) Anmeldenummer: **92202174.6**

(22) Anmeldetag: **29.06.1992**

(54) **Verfahren zur Unterscheidung mindestens zweier Ziele insbesonders für HPRF-Doppler-Radar**

Target distinction method, especially for HPRF Doppler radar

Méthode pour distinguer au moins deux objectifs spécialement pour radars Doppler HPRF

(84) Benannte Vertragsstaaten:
**DE FR GB IT SE**

(30) Priorität: **19.09.1991  DE 4131141**

(43) Veröffentlichungstag der Anmeldung:
**24.03.1993  Patentblatt 1993/12**

(73) Patentinhaber: **Daimler-Benz Aerospace Aktiengesellschaft**
**D-81663 München (DE)**

(72) Erfinder: **Nagel, Dieter, Dr.**
**W-7900 Ulm-Wiblingen (DE)**

(74) Vertreter: **Schulze, Harald Rudolf, Dipl.-Ing. et al**
**Daimler-Benz Aerospace AG**
**Patentabteilung**
**Sedanstrasse 10**
**D-89077 Ulm (DE)**

(56) Entgegenhaltungen:
**EP-A- 0 233 982**   **DE-C- 3 620 734**
**US-A- 4 960 329**

**Beschreibung**

Die Erfindung betrifft ein Verfahren zur Unterscheidung mindestens zweier Ziele mit Hilfe eines Puls-Doppler-Radars nach dem Oberbegriff des Patentanspruchs 1, das aus der EP-A-0 233 982 bekannt ist.

Die in dieser Schrift verwendete Bezeichnung Puls-Doppler-Radar umfaßt auch die Begriffe Puls-Doppler-Radaranlage und Puls-Doppler-Radargerät.

Ein Puls-Doppler-Radar kann räumlich kompakt aufgebaut werden. Es ist daher in vielfältiger Weise als sogenanntes Bordradar in Land- und Luftfahrzeugen einsetzbar. Bei solchen Anwendungen ist daher eine Sende-/Empfangsantenne mit einer möglichst kleinen Fläche (Apertur) erwünscht. Mit einer solchen Anlage ist es aber nur möglich, entweder die Entfernung oder die Geschwindigkeit eines Zieles, z.B. eines Land- oder Luftfahrzeuges, genau zu bestimmen. Sollen Entfernung und Geschwindigkeit eines Zieles gleichzeitig bestimmt werden, so ist dieses lediglich zu Lasten der an sich erreichbaren maximalen Genauigkeiten erreichbar. Dieser Sachverhalt entspricht der Feststellung, daß bei gleichzeitiger Bestimmung der Entfernung und Geschwindigkeit eines Zieles mit Hilfe eines Puls-Doppler-Radars dessen Auflösungsvermögen in der Entfernungs- und der Geschwindigkeitsrichtung verringert ist bezogen auf entsprechende Einzelmessungen. In Entfernungs- und Geschwindigkeitsrichtung sind daher Auflösungsgrenzen vorhanden, unterhalb von denen keine Entdeckung mehrerer Ziele möglich ist. Die Auflösungsgrenze in Entfernungs- oder in Geschwindigkeitsrichtung ist dadurch gekennzeichnet, daß zwei Ziele mit einer bestimmten Wahrscheinlichkeit bei gleicher Dopplergeschwindigkeit in Entfernungsrichtung oder bei gleicher Entfernung in Geschwindigkeitsrichtung separiert werden können.

Die wichtigsten Größen für die Auflösungsgrenzen eines Puls-Doppler-Radars sind unter anderem die Pulswiederholfrequenz PRF, die Länge der verwendeten Fast-Fourier-Transformation $N_{FFT}$, die Abtastzeit $T_a$ sowie die Sendepulslänge $T_{rx}$. Mit derzeit üblichen Verfahren, z.B. dem sogenannten "Valley-Sensing"-Verfahren, bei dem als Auflösungskriterium ein relatives Minimum zwischen zwei Maxima im Signalverlauf gesucht wird, erreicht man mit einer Wahrscheinlichkeit von 50 % Auflösungswerte, die etwa dem 1,5- bis 2-fachen der maximalen Meßgenauigkeit entsprechen. Bei diesen Verfahren wird zur Auflösung zweier Ziele nur die Amplitude des Signalverlaufs verwendet.

Der Erfindung liegt die Aufgabe zugrunde, ein gattungsgemäßes Verfahren dahingehend zu verbessern, daß bei gleichzeitiger Bestimmung der Entfernung und der Geschwindigkeit eines Zieles die zugehörigen Auflösungsgrenzen wesentlich verringert werden.

Diese Aufgabe wird gelöst durch die im kennzeichnenden Teil des Patentanspruchs 1 angegebenen Merkmale. Vorteilhafte Ausgestaltungen und/oder Weiterbildungen sind den Unteransprüchen entnehmbar.

Ein Vorteil der Erfindung besteht darin, daß die Auflösungsgrenzen bei gleichzeitiger Bestimmung der Entfernung und der Geschwindigkeit eines Zieles wesentlich unter denjenigen liegen, die sich bei vergleichbaren Einzelmessungen mit derzeit üblichen Verfahren ergeben, also einem HPRF-Verfahren (High-Pulse-Repetition-Frequency) für die Bestimmung der Entfernung bzw. einem LPRF-Verfahren (Low-Pulse-Repetition-Frequency) für die Bestimmung der Geschwindigkeit eines Zieles.

Die Erfindung beruht darauf, daß bei einem Puls-Doppler-Radar zusätzlich die Phasenlage des von einem oder mehreren Zielen reflektierten Signales ausgewertet wird.

Die Erfindung wird im folgenden anhand von Ausführungsbeispielen näher erläutert unter Bezugnahme auf schematisch dargestellte Zeichnungen. Es zeigen

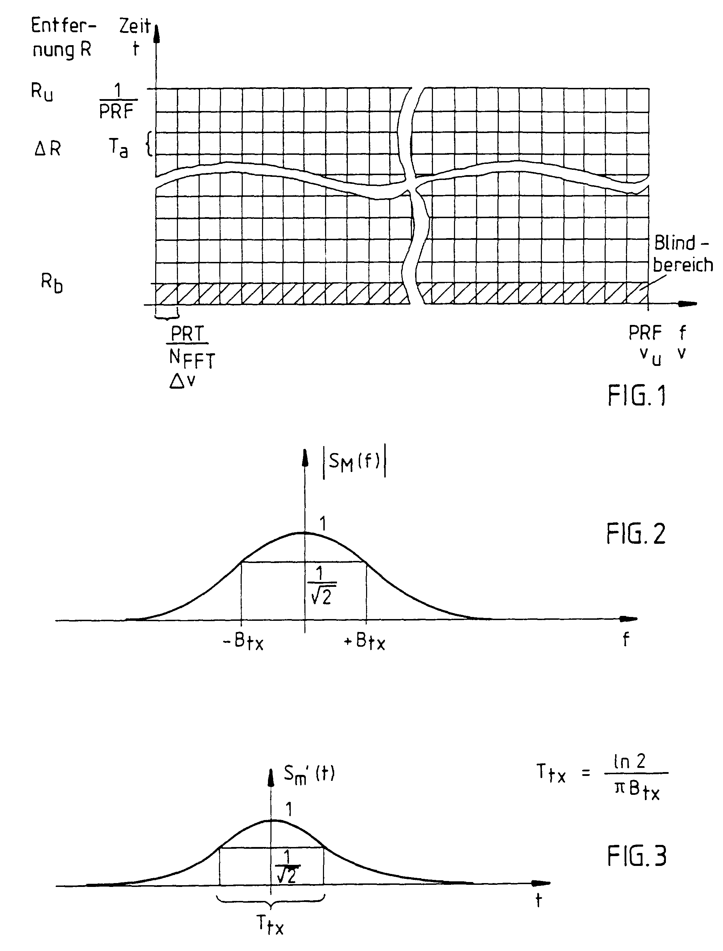

FIG. 1 bis 22 schematisch dargestellte Diagramme zur Erläuterung der Erfindung.

Bei einem Puls-Doppler-Radar wird das empfangene Signal mit einem Signal entsprechend der Sendefrequenz demoduliert und schließlich synchron zur Pulswiederholfrequenz (PRF) abgetastet. Die entstehenden Abtastwerte können entsprechend FIG. 1 in einer Entfernungs-Dopplmatrix angeordnet werden. Dabei kann auf der Abszisse sowohl die Dopplerfrequenz f bis zur Pulswiederholfrequenz PRF als auch die entsprechende Geschwindigkeit v bis zur maximalen Geschwindigkeit $v_u$ aufgetragen werden. Dabei entspricht der Abstand der Linien den Werten $PRF/N_{FFT}$ bzw. $\Delta v$. Auf der Ordinate kann sowohl die Zeit t bis zu der Zeit 1/PRF als auch die Entfernung R bis zu der Entfernung $R_u$ aufgetragen werden. Dabei entspricht der Abstand der Linien der Abtastzeit $T_a$ bzw. der Entfernung $\Delta R$. In Entfernungsrichtung entsteht der schraffiert dargestellte Blindbereich $R_b$.

Der Eindeutigkeitsbereich in Dopplerrichtung ist durch die Pulswiederholfrequenz PRF festgelegt. Dementsprechend erhält man hier für die Meßgenauigkeit $PRF/N_{FFT}$. Die reziproke Pulswiederholfrequenz 1/PRF bestimmt den Eindeutigkeitsbereich in Entfernungsrichtung, wohingegen nun die Meßgenauigkeit durch die Abtastzeit $T_a$ vorgegeben ist. Da man während der Sendephasen nicht empfangen kann, ist das Radar im mehrdeutigen Entfernungsbereich von 0 bis $R_b$ blind, was in FIG. 1 durch eine schraffierte Fläche hervorgehoben ist.

Die in FIG. 1 dargestellten Frequenz- und Zeitgrößen hängen mit den zu messenden physikalischen Größen, nämlich der Geschwindigkeit und der Entfernung, über die Wellenlänge $\lambda$ der Sendefrequenz bzw. über die Lichtgeschwindigkeit c folgendermaßen zusammen:

$$\text{eindeutige Entfernung} \qquad R_u = \frac{c}{2 \cdot PRF}$$

$$\text{eindeutige Geschwindigkeit} \qquad v_u = \frac{\lambda \cdot PRF}{2}$$

$$(2.1)$$

$$\text{Me}\beta\text{genauigkeit der Entfernung} \qquad \Delta R = \frac{cT_a}{2}$$

$$\text{Me}\beta\text{genauigkeit der Geschwindigkeit} \qquad \Delta v = \frac{\lambda \cdot PRF}{2N_{FFT}}$$

Bei einem beispielhaften Puls-Doppler-Radar, das nach dem sogenannten HPRF-Velocity Search Mode arbeitet, gelten für die Abtastzeit $T_a$, die Pulswiederholfrequenz PRF und die Wellenlänge $\lambda$ folgende Grenzen:

$$T_a \geq 0{,}500 \ \mu sec$$

$$200{,}000 \ kHz \leq PRF \leq 250{,}000 \ kHz$$
$$3{,}5 \ cm \leq \lambda \leq 4{,}0 \ cm$$

Dementsprechend erhält man für die Meßgenauigkeiten $\Delta R$ und $\Delta v$:

$$\Delta R \geq 75 \ m$$

$$1{,}709 \ \frac{m}{s} \leq \Delta v \leq 2{,}441 \ \frac{m}{s}$$

Die Eindeutigkeitsbereiche der Entfernung und der Geschwindigkeit liegen dann bei folgenden Werten:

$$0{,}600 \ km \leq R_u \leq 0{,}750 \ km$$

$$3500 \ \frac{m}{s} \leq v_u \leq 5000 \ \frac{m}{s}$$

Der Signalverlauf, der die Auflösungsgrenzen im Zeitbereich bestimmt, wird im wesentlichen durch das im Eingangsbereich des Empfangszweiges vorhandene sogenannte Matched-Filter bestimmt. Das Matched-Filter wird dabei im Frequenzbereich einer Gaußkurve angenähert. Legt man den Verstärkungsfaktor bei der Frequenz 0 fest, z.B. auf den Wert 1, so bleibt als einziger freier Parameter des Gaußfilters noch die Bandbreite 2 $B_{tx}$ (FIG. 2). In FIG. 2 ist das zugehörige Betragsspektrum dargestellt.

Der Amplitudengang soll bei der Frequenz f = $B_{tx}$ um 3 dB abgefallen sein. Die folgende Frequenzfunktion erfüllt diese Forderung:

$$S_M(f) \ = \ \exp\left\{-\pi \left(\frac{f}{aB_{tx}}\right)^2\right\}$$

$$(3.1)$$

$$a \ = \ \sqrt{\frac{2\pi}{\ln 2}}$$

Die inverse Fouriertransformation von Gl. (3.1) ergibt die Impulsantwort des Matched Filters:

$$s_M(t) \quad \bullet\!\!-\!\!o \quad s_m(t) \;=\; c \cdot \exp\left\{\frac{-2}{\ln 2}\left(\pi t\, B_{tx}\right)^2\right\}$$

$$(3.2)$$

$$c \;=\; \sqrt{\frac{2\pi}{\ln 2}}\; B_{tx}$$

Normiert man die Zeitfunktion von Gl. (3.2), so daß ihr Maximum den Wert 1 hat, so gilt:

$$s_m'(t) = \frac{s_m(t)}{c}$$

FIG. 3 zeigt die zugehörige Darstellung der normierten Impulsantwort des Gaußfilters mit der zugehörigen 3 dB Impulsbreite $T_{tx}$.

Die Faltung dieser Impulsantwort mit sich selbst ergibt das Signal hinter dem Matched Filter. Dementsprechend wäre der Empfangspuls optimal angepaßt und man erhielte für ein verrauschtes Empfangssignal den maximalen Signal-zu-Rauschabstand. Das tatsächliche Empfangssignal wird aber mehr oder minder Abweichungen von der oben angenommenen Idealform aufweisen, was den Signal-zu-Rauschabstand verschlechtern wird. Für die analytische Behandlung der Auflösung zweier Ziele benötigt man aber eine Modellvorstellung des Empfangspulses, weswegen die optimale Signalform durchaus als Modell seine Berechtigung hat. Das Signal hinter dem Matched Filter s(t) lautet dann:

$$s(t) \;=\; \exp\left\{-\,\frac{(\pi t\, B_{tx})^2}{\ln 2}\right\} \qquad\qquad (3.3)$$

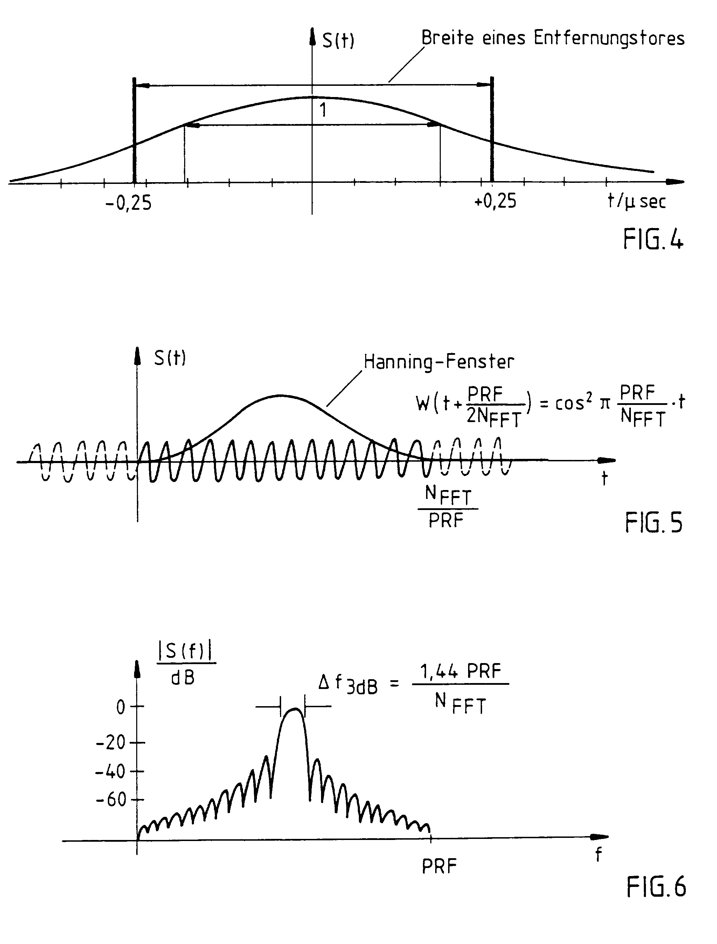

In FIG. 4 ist ein solches Signal s(t) für $B_{tx} = 0{,}5$ MHz sowie maßstabsgetreu die Ausdehnung eines Entfernungstores, was der Meßgenauigkeit entspricht, dargestellt. Die Werte für das Entfernungstor sind dem genannten Beispiel zum HPRF-VS-Mode zu entnehmen.

Der Signalverlauf im Frequenzbereich wird zum einen von der Länge des Signales im Zeitbereich $N_{FFT}/PRF$ und zum anderen von der Wichtungsfunktion bestimmt. Die schmalste Hauptkeule im Frequenzbereich wird durch ein Rechteckfenster im Zeitbereich erzeugt. Die 3 dB Bandbreite der Hauptkeule beträgt hier genau $N_{FFT}/PRF$, wobei $N_{FFT}$ die Länge der verwendeten FFT ist. Jede andere Fensterfunktion verbreitert die Hauptkeule, senkt aber die Nebenzipfel ab. Eine Fensterfunktion wird dementsprechend nur nach ihrem Nebenzipfelverhalten im Frequenzbereich gewählt. Bei gängigen Fensterfunktionen liegt die 3 dB Breite bei $x \cdot PRF/N_{FFT}$, $1 \leq x \leq 2$. In den Darstellungen entsprechend FIG. 5 und FIG. 6 wurde ein Hammingfenster verwendet. Die 3 dB Breite für die Frequenz bzw. für die entsprechende Geschwindigkeit ist dann:

$$\Delta f_{3dB} \;=\; \frac{1{,}44\ PRF}{N_{FFT}}$$

$$(3.4)$$

$$\Delta v_{3dB} \;=\; \frac{0{,}72 \cdot PRF \cdot \lambda}{N_{FFT}}$$

Dabei zeigt FIG. 5 das Zeitsignal und FIG. 6 das zugehörige Amplitudenspektrum eines gewichteten monochromatischen Signals. Das Sendesignal $s_t(t)$ eines Puls-Doppler-Radars kann folgendermaßen beschrieben werden:

$$s_t(t) = b(t)e^{j\omega_0 t} \qquad\qquad (4.1)$$

Dabei ist b(t) eine in der Pulswiederholfrequenz PRF periodische Funktion und $\omega_0$ die Sendefrequenz.

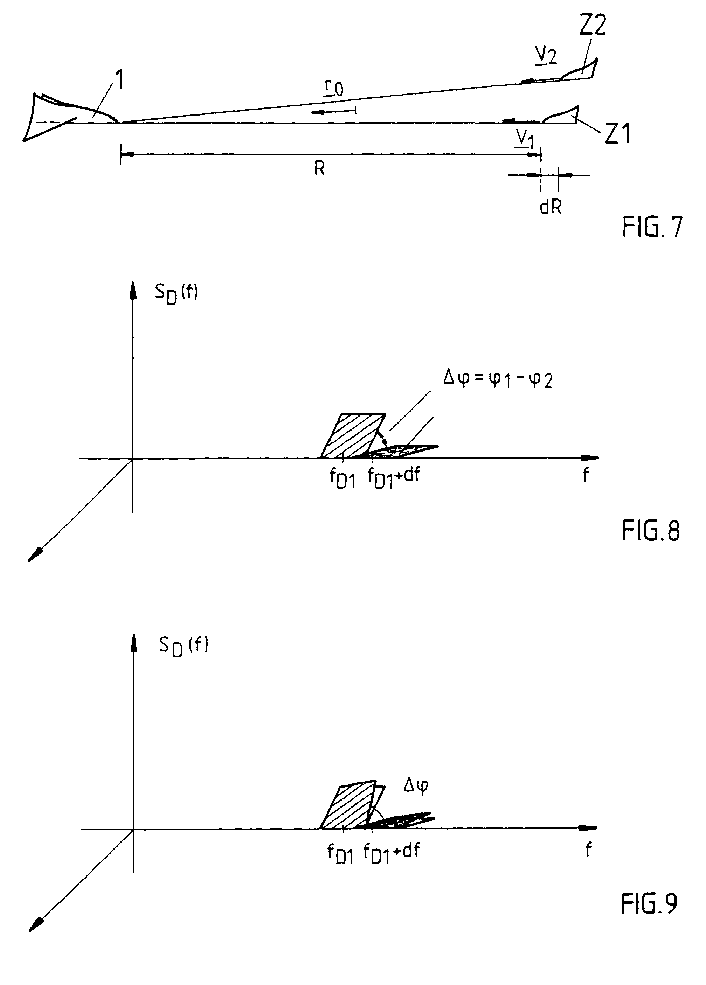

Hat man nun eine Situation entsprechend FIG. 7, bei welcher dem links dargestellten Luftfahrzeug 1, welches das Puls-Doppler-Radar hat, zwei nahe beieinander fliegende Ziele Z1, Z2 mit fast gleichen Geschwindigkeiten $\underline{v}_1$, $\underline{v}_2$ ent-

gegenkommen, so empfängt das Luftfahrzeug 1 das Empfangssignal $s_r(t)$:

$$s_r(t) = c_1 b(t-T_r)e^{j(2\pi f_0 + 2k\underline{v}_1\underline{r}_0)t + \varphi_1}$$
$$+ c_2 b(t-T_r - \frac{2dR}{c})e^{j(2\pi f_0 + 2k\underline{v}_2\underline{r}_0)t + \varphi_2} \qquad (4.2)$$

$$\text{mit } T_r = \frac{2R}{c} \text{ und } dv = \underline{v}_2\underline{r}_0 - \underline{v}_1\underline{r}_0,$$

$$f_{D1} = \frac{2\underline{v}_1\underline{r}_0}{\lambda} , \; f_{D2} = \frac{2\underline{v}_2\underline{r}_0}{\lambda}$$

Gleichung (4.2) besteht aus zwei additiv sich überlagernden Anteilen, wobei $c_1$ und $c_2$ die Amplituden der beiden Reflexionsanteile sind. Beide Terme unterscheiden sich in der Dopplerfrequenz und in der Laufzeit nur um die differentiellen Anteile dR und dv. Wichtig ist zudem, daß beide Ziele zufällige Phasen $\varphi_1$ und $\varphi_2$ erzeugen, die außerdem völlig unkorreliert zueinander sind. Bei der Demodulation mit $e^{-j2\pi f_0 t}$ bleiben diese beiden Phasen erhalten, da die Anfangsphase im Demodulator ohne Einschränkung der Allgemeinheit zu Null angesetzt werden kann:

$$s_D(t) = s_r(t) \cdot e^{-j2\pi f_0 t} = c_1 b(t-T_r)e^{j(2\pi f_{D1}t + \varphi_1)}$$
$$+ c_2 b(t-T_r - \frac{2dR}{c})e^{j(2\pi(f_{D1}+df)t + \varphi_2)} \qquad (4.3)$$

Die Fouriertransformierte von Gleichung (4.3) wird zu:

$$S_D(f) = c_1 e^{j\varphi_1} B(f-f_{D1})e^{-j2\pi f T_r}$$
$$+ c_2 e^{j\varphi_2} B(f-f_{D1}-df)e^{-j2\pi f(T_r + \frac{2dR}{c})} \qquad (4.4)$$

wobei B(f) aus b(t) $\circ\!\!-\!\!\bullet$ B(f) hervorging. Wird die Fouriertransformierte durch eine diskrete Fouriertransformation (DFT) approximiert, so erhält man ein diskretes Spektrum an den Stützstellen i:

$$i\Delta f = f \qquad (4.5)$$

Die Zeitverschiebung $T_r$ bzw. die Laufzeit des Signals bewirkt im Frequenzbereich eine mit der Frequenz linear ansteigende Phase, wobei die Steigung, d.h. die Gruppenlaufzeit, direkt proportional der Zielentfernung ist. Bei der Annahme, daß sich dieser Phasenterm von Abtastpunkt zu Abtastpunkt nur sehr wenig ändert, erhält man:

$$2\pi i\Delta f T_r = 2\pi i T_r \frac{PRF}{N_{FFT}} \qquad (4.6)$$

$$\text{mit } 2\pi T_r \frac{PRF}{N_{FFT}} \ll \pi$$

Dann kann man ohne Einschränkung der Allgemeinheit für das Spektrum folgendes schreiben:

$$S_D(f) = c'_1 e^{j\varphi_1} B(f-f_{D1}) + c'_2 e^{j\varphi_2} B(f-f_{D1}-df) \qquad (4.7)$$

Diese Gleichung ist gültig, da sich das Spektrum B(f) nur über wenige Abtastwerte erstreckt. FIG. 8 soll die Wichtigkeit der beiden Phasenwerte $\varphi_1$ und $\varphi_2$ entsprechend Gleichung (4.7) verdeutlichen. Dazu zeigt die FIG. 8 das Spektrum zweier nah beieinander liegender Ziele, die sich in der Phase wesentlich unterscheiden.

Gilt die Voraussetzung in Gleichung (4.6) nicht, so dreht die Phase längs des Spektrums um einen gewissen Betrag weiter. Das Weiterdrehen der Phase ist von der Entfernung des Zieles gemäß Gleichung (4.4) abhängig. Dieser Effekt ist in FIG. 9 dargestellt. Dort sind die Spektren zweier Ziele mit linear sich ändernder Phase dargestellt.

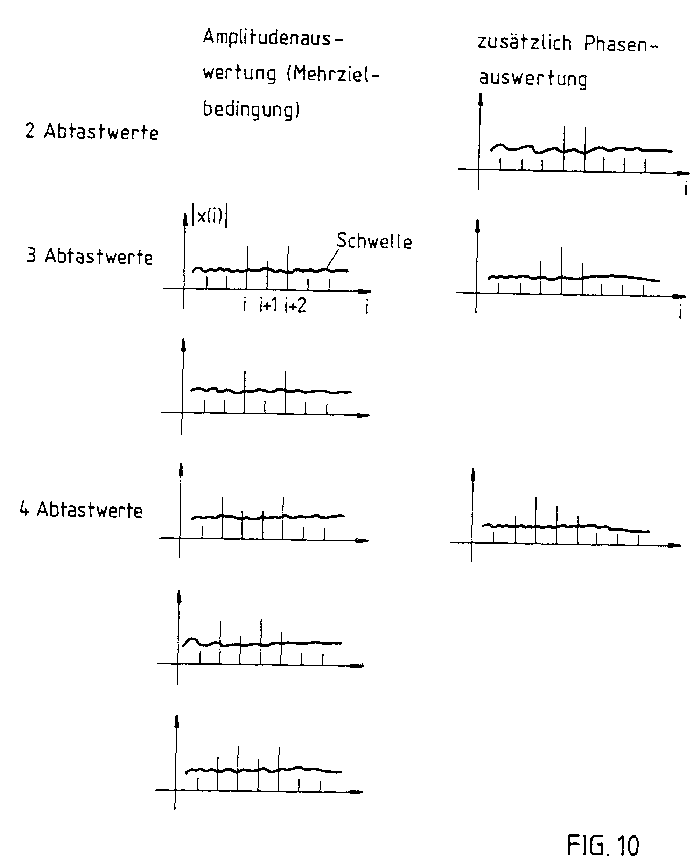

In FIG. 10 sind verschiedene Fälle dargestellt, bei denen zur Aufdeckung einer Mehrzielsituation die Auswertung der Amplitude genügt. Voraussetzung für eine solche Auflösung ist, daß die Zahl der verwendeten Filter oder Entfernungstore größer als zwei ist. Bei drei nebeneinanderliegenden Filtern oder Entfernungstoren $x(i)$, $x(i+1)$, $x(i+2)$ wird genau dann auf eine Mehrzielsituation geschlossen, wenn gilt:

$$\{|x(i+1| < |x(i)|\} \wedge \{|x(i+1)| < |x(i+2)|\}$$

$$(5.1)$$

$$\text{oder} \qquad |x(i+1)| < \lambda(i+1)$$

$$\text{Schwelle an der Stelle } i+1$$

d.h., wenn entweder der mittlere Wert die kleinste Amplitude besitzt oder die Schwelle nicht überschreitet. Bei vier aufeinanderfolgenden Filtern oder Entfernungstoren $x(i)$, $x(i+1)$, $x(i+2)$, $x(i+3)$, die allesamt die Schwelle überschreiten, lautet die Bedingung für eine Mehrzielentscheidung:

$$[ \{|x(i+1)| < |x(i)|\} \wedge$$
$$\{|x(i+1)| < |x(i+2)| \vee |x(i+1)| < |x(i+3)|\} ]$$
$$\vee [ \{|x(i+2)| < |x(i)| \wedge |x(i+1)|\} \qquad (5.2)$$
$$\wedge \{|x(i+2)| < |x(i+3)|\} ]$$

wobei $\wedge$ ein logisches UND und $\vee$ ein logisches ODER bedeuten. Sind die Bedingungen in (5.1) und (5.2) nicht erfüllt, so wird zur Auswertung zusätzlich die Phase herangezogen. Die Erweiterung der Bedingung (5.2) auf eine Situation mit fünf oder mehr nebeneinanderliegenden Filtern oder Entfernungstoren ist nicht sonderlich schwierig und wird hier nicht explizit durchgeführt.

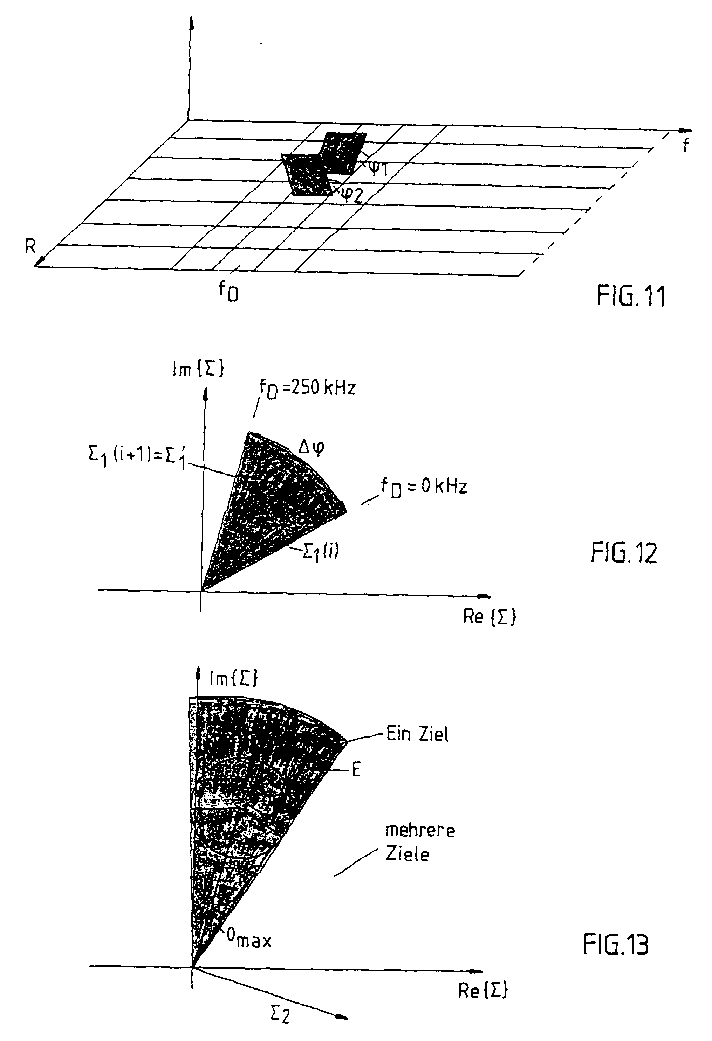

In FIG. 11 sind modellmäßig zwei Ziele dargestellt, die exakt die gleiche Geschwindigkeit und damit die gleiche Dopplerverschiebung haben, aber in zwei benachbarten Entfernungstoren erscheinen.

Es müssen nun die beiden Fälle unterschieden werden, daß sich ein Ziel auf zwei Entfernungstore aufsplittet oder daß zwei Ziele in zwei benachbarten Entfernungstoren erscheinen. Dies ist nur anhand der beiden zu den Zielen gehörenden Phasenwerte $\varphi_1$ und $\varphi_2$ möglich. Es wird zunächst die Einzielsituation betrachtet und Gleichung (4.3) das entsprechende Zeitsignal entnommen:

$$s_{D1}(t) = c_1 b(t-T_r)e^{j(2\pi f_{D1}t+\varphi_1)} \tag{5.3}$$

Wird dieses Signal mit der Abtastzeit $T_a$ abgetastet, so kann im Exponenten die Zeit $t$ durch folgenden Ausdruck ersetzt werden:

$$t = iT_a = i \cdot \frac{2\Delta R}{c}$$

$$s_{D1}(iT_a) = c_1 \cdot b(iT_a - T_r)e^{j(\frac{4\pi\Delta R}{c}f_{D1}\cdot i+\varphi_1)} \tag{5.4}$$

Demnach dreht die Phase aufgrund der Dopplergeschwindigkeit des Zieles pro Entfernungstor um folgenden Wert $\Delta\varphi$ weiter:

$$\Delta\varphi(f_{D1}) = \frac{4\pi\Delta R}{c}f_{D1} \tag{5.5}$$

Diese Phasendrehung ist proportional zur Dopplerverschiebung $f_{D1}$. Da die Dopplerfrequenz sehr genau bekannt ist, kann bei dem Auflösungsalgorithmus eine entsprechende Korrektur eingeführt werden. Für die Daten des eingangs erwähnten Beispiels liegt die Phasendrehung innerhalb folgender Grenzen:

$$\Delta R = 75 \text{ m}$$

$$0 \leq f_D \leq 250 \text{ kHz}$$

$$\rightarrow 0° \leq \Delta\varphi \leq 46°$$

und kann im Extremfall 756 mrad oder 46° betragen. Dieser Sachverhalt ist in FIG. 12 dargestellt. Die genannte Korrektur muß somit den von der Dopplerfrequenz abhängigen Wert $\Delta\varphi$ berechnen und dann einen Signalwert im benachbarten Entfernungstor erzeugen, der einer Einzelsituation entspricht.

$$\Sigma_1(i+1) = \Sigma_1(i)e^{j\Delta\varphi} = \Sigma_1'$$

$$\Sigma_1' \;=\; \begin{pmatrix} \mathrm{Re}\{\Sigma_1\}\cos\Delta\varphi \;-\; \mathrm{Im}\{\Sigma_1\}\sin\Delta\varphi \\[2em] \mathrm{Re}\{\Sigma_1\}\sin\Delta\varphi \;+\; \mathrm{Im}\{\Sigma_1\}\cos\Delta\varphi \end{pmatrix}$$

Dieser Wert $\Sigma_1'$ muß mit dem tatsächlichen komplexen Wert $\Sigma_2$ des zu $\Sigma_1$ benachbarten Entfernungstores verglichen werden. Wählt man beispielsweise einen minimalen Signal-zu-Rauschabstand von 10 dB, d.h.

$$\mathrm{SNR} \;=\; 10\,\log\frac{|\Sigma_1'|^2}{\sigma_n^2} \;\overset{!}{=}\; 10\ \mathrm{dB} \qquad\qquad (5.7)$$

so erhält man einen Winkelsektor um den korrigierten Wert $\Sigma_1'$. Dieser Sachverhalt ist in FIG. 13 dargestellt.

Die maximale Breite $\theta_{max}$ des Sektors ist dabei abhängig vom Signal-zu-Rauschabstand SNR.

Dieser Winkelbereich ist der Entscheidungsraum E für eine Einzelsituation, d.h. alle Ziele innerhalb dieses Entscheidungsraumes werden als Einzelziele gewertet. Im hierzu komplementären Winkelbereich, d.h. außerhalb des Entscheidungsbereiches liegende Ziele werden als Mehrzielsituation (aus mehreren Einzelzielen bestehend) gewertet. Die maximale Breite $2\theta_{max}$ des Entscheidungsraumes E ergibt sich aus der Gleichung

$$\sin\theta_{max} = \frac{\sigma_n}{|\Sigma_1'|} = \frac{1}{\sqrt{10}} \qquad\qquad (5.8)$$

Dabei wurde ein Signal-zu-Rauschabstand von 10 dB zugrunde gelegt. Gleichung (5.8) nach $\theta_{max}$ aufgelöst ergibt:

$$\theta_{max} = 18{,}5° \qquad\qquad (5.9)$$

Der Entscheidungsraum für ein Ziel ist somit durch den Winkelsektor

$$-\theta_{max} < \arg\Sigma_1' - \arg\Sigma_2 < \theta_{max} \qquad\qquad (5.10)$$

begrenzt. Um die inversen trigonometrischen Funktionen zu umgehen, wird die folgende Beziehung benutzt:

$$\varphi \;=\; \arg\Sigma_1' - \arg\Sigma_2$$

$$\qquad\qquad\qquad (5.11)$$

$$\cos\varphi \;=\; \frac{\Sigma_1' \cdot \Sigma_2}{|\Sigma_1'|\cdot|\Sigma_2|}$$

Mit dem Wert in Gleichung (5.9) erhält man schließlich folgendes Unterscheidungsmerkmal für eine Mehrzielsituation:

$$\frac{\Sigma_1'\cdot\Sigma_2}{|\Sigma_1'|\cdot|\Sigma_2|} \quad \begin{matrix} \text{ein Ziel} \\ > \\ \geq \\ < \\ \text{zwei Ziele} \end{matrix} \quad 0{,}95 \qquad\qquad (5.12)$$

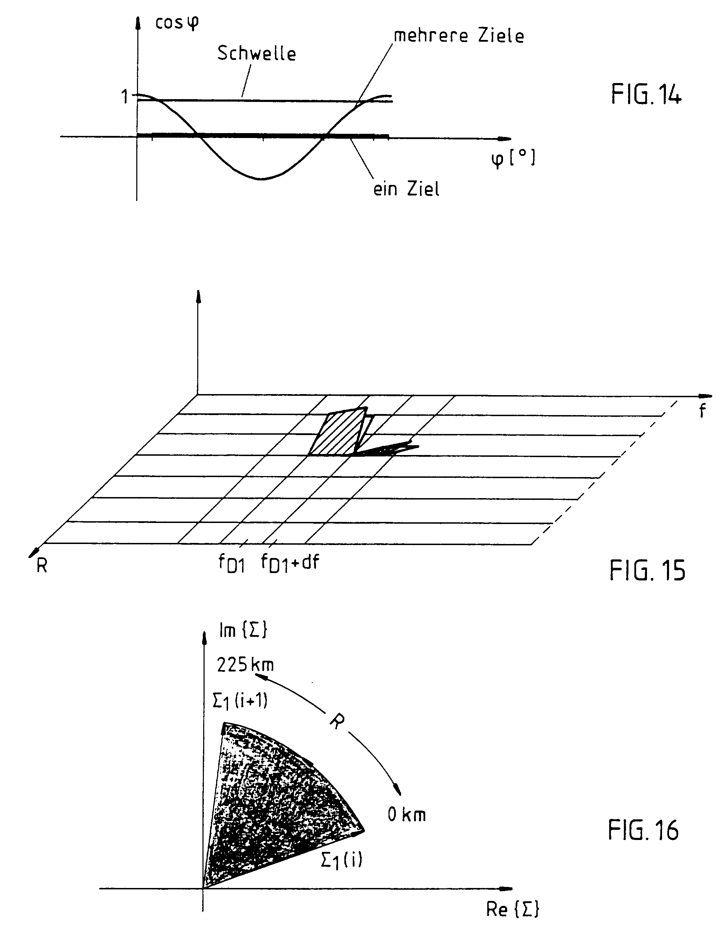

Dieser Sachverhalt ist in FIG. 14 dargestellt. Analytisch sehr schwierig zu berechnen ist die Wahrscheinlichkeit $P_{F2}$, daß eine Einzelsituation als eine Mehrzielsituation deklariert wird. $P_{F2}$ ist durch folgendes Integral gegeben:

$$P_{F2}(\theta_{max}) = \int_{arg\Sigma_1'-\theta_{max}}^{arg\Sigma_1'+\theta_{max}} \int_0^\infty f_{r,\varphi'}(r,\varphi'|Einziel)\, dr\; d\varphi' = const \tag{5.13}$$

Die bedingte Dichtefunktion unter dem Integral ist eine Gaußkurve, die mit den Hilfsmitteln der numerischen Mathematik berechnet werden kann.

In FIG. 15 sind zwei Ziele dargestellt, die exakt die gleiche Entfernung haben, sich aber in Dopplerrichtung um einen differentiellen Wert df unterscheiden.

Weiterhin ist in FIG. 15 dargestellt, daß sich die Phase jedes Zieles längs der Dopplerrichtung weiterdreht. In diesem Fall wird wieder die Einzelsituation für das Dopplersignal betrachtet. Nach Gleichung (4.4) gilt dann folgendes:

$$S_{D1}(f) = c_1 e^{j\varphi_1} B(f - f_{D1}) e^{-j2\pi f T_r} \tag{5.14}$$

Diesmal wird die Abtastung im Frequenzbereich vorgenommen. Es gilt mit

$$f = i\Delta f = i\,\frac{PRF}{N_{FFT}} \quad und \quad T_r = \frac{2R}{c} \tag{5.15}$$

$$S_{D1}(i\Delta f) = c_1 e^{j\varphi_1} e^{-2j\pi i\Delta f \frac{2R}{c}} \cdot B(i\Delta f - f_{D1})$$

Auch hier dreht die Phase von Abtastwert zu Abtastwert weiter. Diesmal ist aber die Entfernung bzw. die Laufzeit des Signals dafür verantwortlich. Damit erhält man folgende Phasendifferenz $\Delta\varphi(R)$ zwischen den einzelnen Dopplerfiltern:

$$\Delta\varphi(R) = \frac{4\pi R}{c} \cdot \frac{PRF}{N_{FFT}} \tag{5.16}$$

Der Unterschied zu dem vorhergehenden Beispiel besteht darin, daß die Entfernung nicht bekannt ist und dementsprechend auch keine Korrektur durchgeführt werden kann. In unserem Beispiel für den HPRF-VS-Mode erhält man für die Phasendrehung:

$$PRF = 250\ kHz,\ R_{max} = 225\ km,\ N_{FFT} = 2048$$

$$0 \le R \le R_{max}$$

$$\rightarrow 0° \le \Delta\varphi \le 65°$$

Bei einer maximalen Entfernung von 225 km dreht die Phase um 65° oder 1,13 rad weiter.

In FIG. 16 ist der Zusammenhang zwischen der Phasendrehung zweier benachbarter Dopplerfilter und der Entfernung dargestellt.

Da die Entfernung nicht bekannt ist, wird der Vektor $\Sigma_1(i)$ genau in die Mitte des in FIG. 16 dargestellten Sektors gedreht. Dies wird erreicht durch eine komplexe Multiplikation mit $e^{j32,50}$:

$$\Sigma_1' = \Sigma_1 \cdot e^{j32,5°} \qquad (5.17)$$

$$= \begin{pmatrix} \mathrm{Re}\{\Sigma_1\}\cos 32,5° - \mathrm{Im}\{\Sigma_1\}\sin 32,5° \\ \mathrm{Re}\{\Sigma_1\}\sin 32,5° + \mathrm{Im}\{\Sigma_1\}\cos 32,5° \end{pmatrix}$$

$$= \begin{pmatrix} \mathrm{Re}\{\Sigma_1\} \cdot 0,843 - \mathrm{Im}\{\Sigma_1\} \cdot 0,537 \\ \mathrm{Re}\{\Sigma_1\} \cdot 0,537 + \mathrm{Im}\{\Sigma_1\} \cdot 0,843 \end{pmatrix}$$

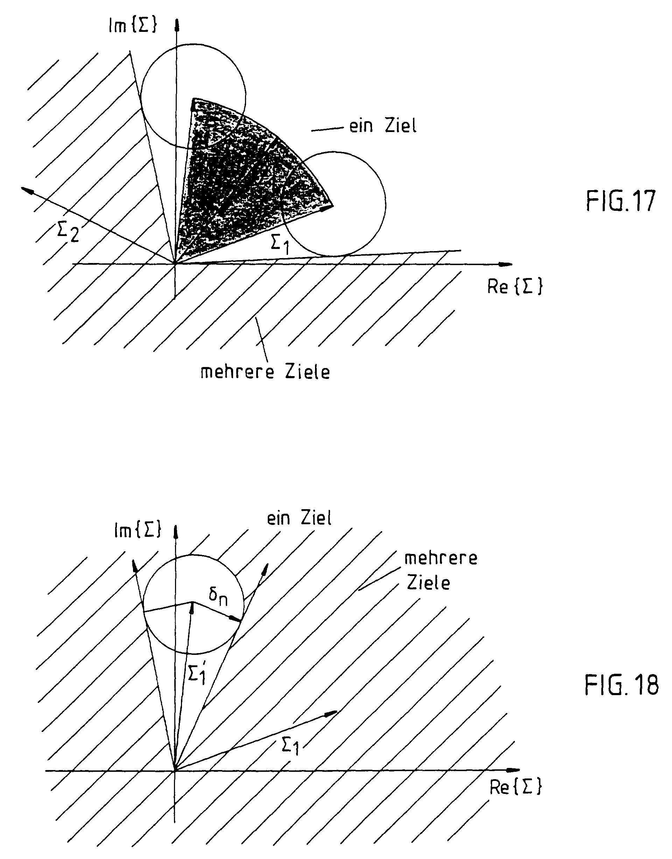

Es wird nun wieder ein Signal-zu-Rauschabstand von 10 dB angenommen. Man erhält damit gemäß FIG. 17 einen um $\Sigma_1'$ symmetrischen Sektor, der als Entscheidungsraum für eine Einzelsituation dient. Dabei wurde der in FIG. 16 dargestellte Sektor nach rechts und links um $\theta_{max} = 18,5°$ entsprechend Gleichung (5.9) erweitert. Es gilt damit für die Winkelgrenzen des Sektors:

$$- \theta_{max} - 32,5° < \mathrm{arg}\Sigma_1' - \mathrm{arg}\Sigma_2 < \theta_{max} + 32,5°$$

$$- 51° < \mathrm{arg}\Sigma_1' - \mathrm{arg}\Sigma_2 < 51° \qquad (5.18)$$

Auch hier kann Gleichung (5.11) angewendet werden und somit die inversen trigonometrischen Funktionen umgangen werden. Dies ist aber nur dadurch möglich, weil der Vektor $\Sigma_1'$ in die Mitte des Entscheidungsraumes gelegt wurde und somit die der Cosinusfunktion entsprechenden Verhältnisse erzeugt wurden. Der Sektor für eine Einzelsituation hat demnach eine Ausdehnung von $\pm 51°$ um das Argument von $\Sigma_1'$. Dies umgesetzt ergibt für das Entscheidungskriterium:

$$\frac{\Sigma_1' \cdot \Sigma_2}{|\Sigma_1'| \cdot |\Sigma_2|} \quad \begin{matrix} \text{ein Ziel} \\ > \\ - \\ < \\ \text{Mehrfachziel} \end{matrix} \quad 0,63 = \cos(51°) \qquad (5.19)$$

Ist die Entfernung R bekannt, so kann die Phasendrehung zwischen zwei benachbarten Dopplerfiltern exakt vorausberechnet werden. Es gilt mit Gleichung (5.16):

$$\Delta\varphi(R) = \frac{4\pi R \cdot PRF}{c \, N_{FFT}} \qquad (5.20)$$

Demnach kann der komplexe Zeiger um die der Entfernung entsprechende Phase weitergedreht werden:

$$\Sigma_1' = \Sigma_1 e^{j\Delta\varphi (R)} \qquad (5.21)$$

$$\Sigma 1' = \begin{pmatrix} \mathrm{Re}\{\Sigma_1\}\cos\Delta\varphi - \mathrm{Im}\{\Sigma_1\}\sin\Delta\varphi \\ \mathrm{Re}\{\Sigma_1\}\sin\Delta\varphi + \mathrm{Im}\{\Sigma_1\}\cos\Delta\varphi \end{pmatrix}$$

Die Bestimmung des Entscheidungsraumes für eine Mehrzielsituation erfolgt nun gemäß den vorherigen Ausführungen. Bei einem beispielhaften Signal-zu-Rauschabstand von 10 dB wird der Sektor, in dem die Hypothese für eine Einzelsituation gefällt wird, durch folgende Winkelwerte begrenzt:

$$- \theta_{max} < \mathrm{arg}\Sigma_1' - \mathrm{arg}\Sigma_2 < \theta_{max} \qquad (5.22)$$

$$\theta_{max} = 18,5° \text{ für SNR} = 10 \text{ dB}$$

Dieser Sachverhalt ist in FIG. 18 dargestellt. Das Entscheidungskriterium für eine Mehrzielsituation bzw. eine Einzelsituation ist identisch mit Gleichung (5.12)

$$\frac{\Sigma_1' \cdot \Sigma_2}{|\Sigma_1'| \cdot |\Sigma_2|} \quad \begin{array}{c} \text{ein Ziel} \\ > \\ — \\ < \\ \text{mehrere Ziele} \end{array} \quad 0,95 \qquad (5.19)$$

Dabei liegen nun die Vektoren $\Sigma_1$ und $\Sigma_2$ nicht in Entfernungsrichtung nebeneinander, sondern in Dopplerrichtung. Die Darstellung dieses Entscheidungskriteriums ist FIG. 14 zu entnehmen.

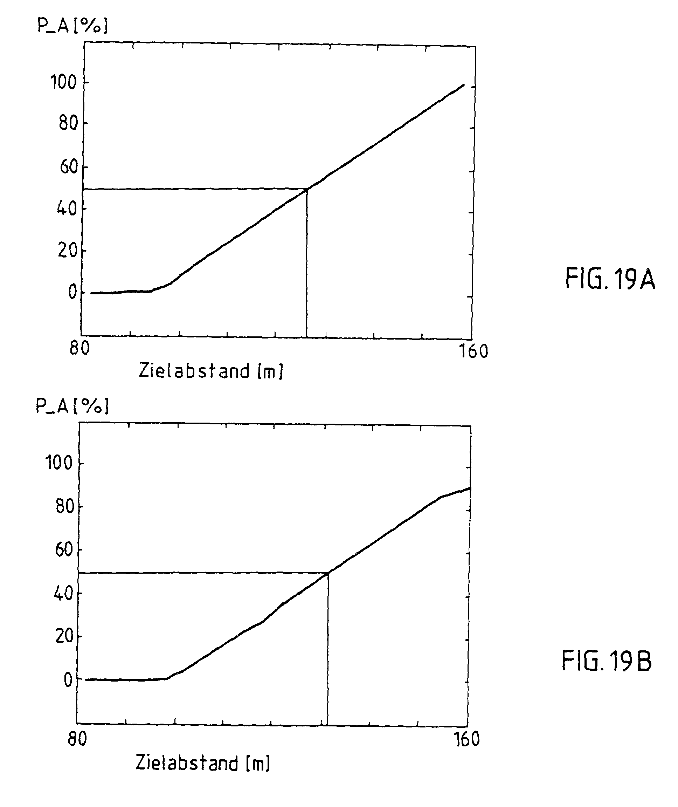

Die FIG. 19 bis 22 zeigen Ausführungsbeispiele zur Erläuterung des Auflösungsvermögens eines HPRF-Radars unter verschiedenen Bedingungen.

FIG. 19a und b zeigen die Auflösungswahrscheinlichkeit zweier Ziele in Entfernungsrichtung. In den reflektierten Signalen werden lediglich die von beiden Zielen überlagerten Amplituden ausgewertet. Dabei haben beide Ziele genau die gleiche Dopplergeschwindigkeit von ungefähr 300 m/s, den gleichen Rückstrahlquerschnitt was zu gleichen Amplituden führt und eine mittlere Entfernung von ungefähr 50 km. Das HPRF-Radar arbeitet mit einer Sendewellenlänge von ungefähr 3,5 cm. Die ausgesandte Pulslänge (Abtastzeit) entspricht einer Entfernungstorlänge von ungefähr 75 m, die Bandbreite $B_{tx}$ des Matched-Filters im Eingang des Empfangszweiges beträgt $B_{tx}$=0,85 MHz. FIG. 19a zeigt die Erkennungswahrscheinlichkeit P A (in %) in Abhängigkeit von dem Zielabstand (in m), d.h. dem Abstand zwischen den zu detektierenden Zielen, bei der erwähnten mittleren Entfernung. Dabei wurde am Ausgang des Matched-Filters ein Signal-zu-Rauschabstand von 40 dB zugrunde gelegt. Aus FIG. 19a ist ersichtlich, daß bei einer Entdeckungswahrscheinlichkeit von 50 % noch zwei Ziele mit einem minimalen Zielabstand von ungefähr 112 m als zwei Ziele erkannt werden.

Das Beispiel entsprechend FIG. 19b unterscheidet sich von demjenigen der FIG. 19a lediglich dadurch, daß der erwähnte Signal-zu-Rauschabstand 25 dB beträgt. Selbst unter diesen Bedingungen vergrößert sich der minimale Zielabstand lediglich um ungefähr 10 m auf ungefähr 122 m.

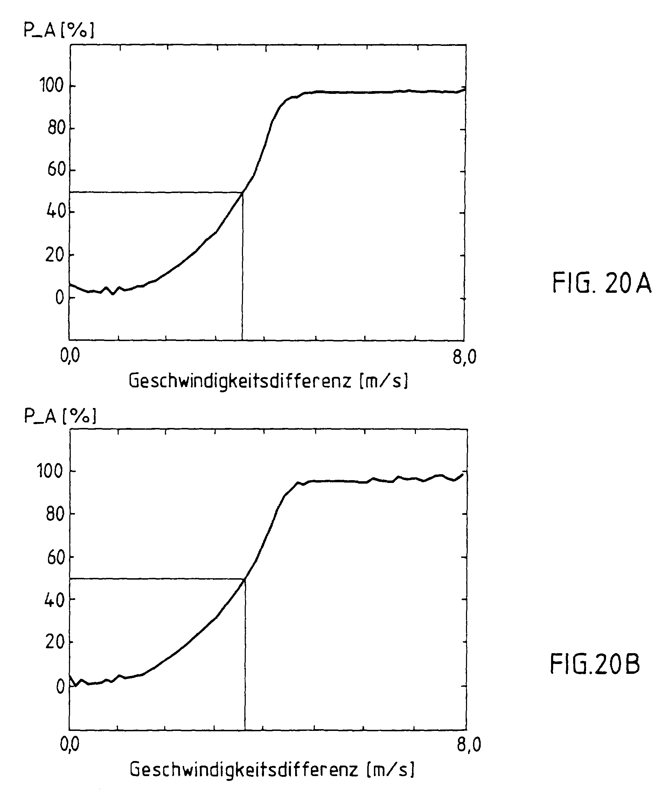

FIG. 20a und b zeigen die Auflösungswahrscheinlichkeit zweier Ziele in Geschwindigkeitsrichtung. Dabei wird, wie in FIG. 19, lediglich die Amplitude des Summensignals der reflektierten Ziele ausgewertet. Beide Ziele haben genau die gleiche Entfernung von ungefähr 50 km bei einer mittleren Geschwindigkeit von ca. 300 m/s und gleichen Rückstrahlquerschnitten. Die Länge der FFT betrug: $N_{FFT}$=2048, die Pulswiederholfrequenz war: PRF = 250 KHz. Zur Wichtung wurde ein Hanning-Fenster verwendet. Bei FIG. 20a ist am Ausgang des Matched-Filters ein Signal-zu-Rauschabstand von 40 dB. Dabei entspricht die 50%-Entdeckungswahrscheinlichkeit bei den Zielen einer Geschwindigkeitsdifferenz von ungefähr 3,33 m/s. Bei einem Signal-zu-Rauschabstand von 10 dB (FIG. 20b) ist nahezu die gleiche Geschwindigkeitsauflösung vorhanden.

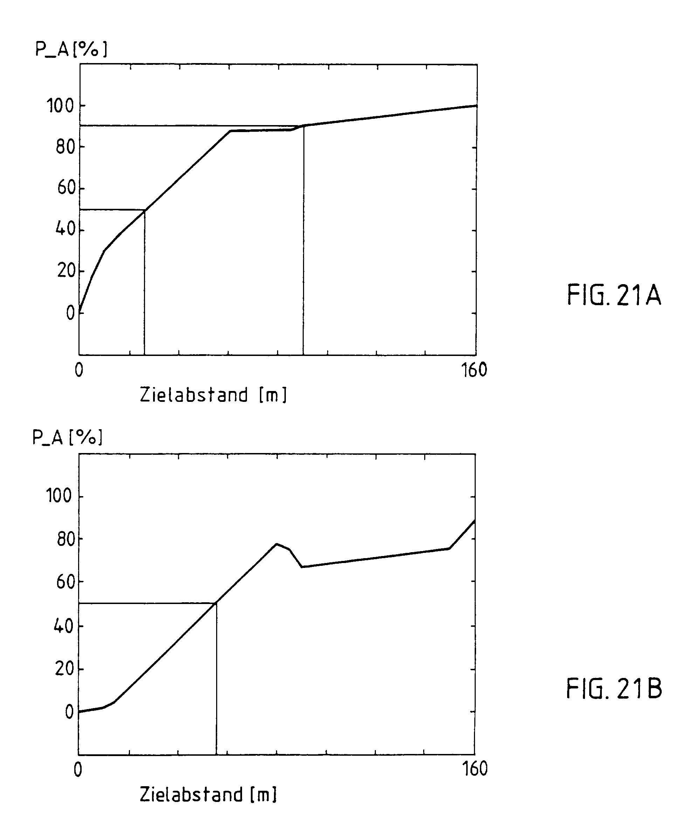

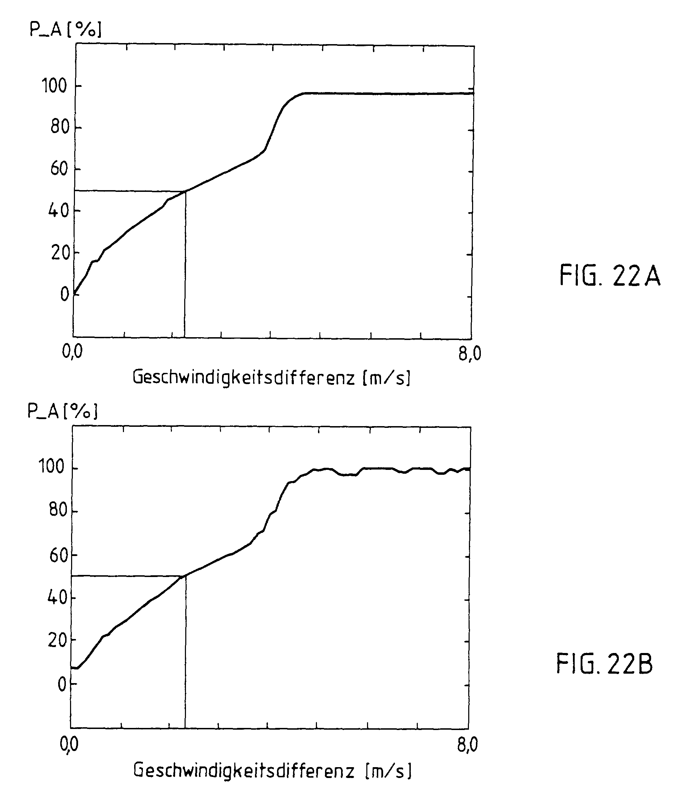

Die FIG. 21a, b und 22a, b entsprechen denjenigen der FIG. 19a, b bzw. 20a, b, jedoch mit dem Unterschied, daß zusätzlich zur Amplitude (Betrag) die Phase ausgewertet wird.

In FIG. 21a entsprechen die Parameter denjenigen der FIG. 19a. Der Signal-zu-Rauschabstand beträgt 40 dB. Aus der Figur ist ersichtlich, daß die 50%-Entdeckungswahrscheinlichkeit auf einen Zielabstand von ungefähr 25 m gesunken ist. Bei einem Signal-zu-Rauschabstand von 25 dB (FIG. 21b) vergrößert sich dieser Zielabstand wieder auf ungefähr 52 m.

In FIG. 22a entsprechen die Parameter denjenigen der FIG. 20a. Der Signal-zu-Rauschabstand beträgt 40 dB. Es ist ersichtlich, daß die 50%-Entdeckungswahrscheinlichkeit auf eine Geschwindigkeitsdifferenz von ungefähr 2,1 m/s gesunken ist. Diese minimale Geschwindigkeitsdifferenz bleibt vorteilhafterweise auch bei wesentlich geringeren Signal-zu-Rauschabständen erhalten, z.B. bei 25 dB entsprechend FIG. 22b.

Die Erfindung ist nicht auf die beschriebenen Ausführungsbeispiele beschränkt, sondern sinngemäß auf weitere anwendbar, z.B. auf Puls-Doppler-Radare, die nach dem MPRF- oder LPRF-Verfahren arbeiten.

**Patentansprüche**

1. Verfahren zur Unterscheidung mindestens zweier Ziele mit Hilfe eines Puls-Dopplerradars, wobei die von mindestens einem Ziel reflektierten Radar-Signale bezüglich der Entfernungs- und/oder Geschwindigkeitsrichtung ausgewertet werden und daraus auf das Vorhandensein eines oder mehrerer Ziele geschlossen wird, <u>dadurch gekennzeichnet</u>,

- daß in dem von mindestens einem Ziel reflektierten Radar-Signal dessen Phasenlage ausgewertet wird,
- daß daraus eine mittlere Phasenlage des Nachbarfilters bzw. des Nachbarentfernungstores bestimmt wird,
- daß die Abweichungen der Phasenlage des Nachbarfilters bzw. des Nachbarentfernungstores von der zuvor berechneten mittleren Phasenlage bestimmt werden und

- daß auf eine Mehrzielsituation erkannt wird, sofern die Abweichungen der Phasenlage einen zugehörigen Schwellwert überschreiten.

2. Verfahren nach Anspruch 1, dadurch gekennzeichnet, daß der Schwellwert in Abhängigkeit von dem Signal-zu-Rauschverhältnis des empfangenen Signals nach dessen Durchlaufen eines Bewertungsfilters gebildet wird.

3. Verfahren nach Anspruch 1 oder Anspruch 2, dadurch gekennzeichnet, daß das Bewertungsfilter als Gaußfilter ausgebildet wird.

4. Verfahren nach einem der vorhergehenden Ansprüche, dadurch gekennzeichnet, daß für jeden Dopplerbereich eine mittlere Phasenlage im benachbarten Dopplerfilter gebildet wird.

5. Verfahren nach einem der vorhergehenden Ansprüche, dadurch gekennzeichnet, daß für jeden Entfernungsbereich eine mittlere Phasenlage im Nachbarentfernungstor gebildet wird.

6. Verfahren nach einem der vorhergehenden Ansprüche, dadurch gekennzeichnet, daß zusätzlich zu den Amplitudenwerten die Abweichungen der Phasenlagen zu den berechneten mittleren Phasenlagen ausgewertet werden, und daß beim Überschreiten einer zugehörigen Schwelle auf das Vorhandensein einer Mehrzielsituation geschlossen wird.

7. Verfahren nach einem der vorhergehenden Ansprüche, dadurch gekennzeichnet, daß das Puls-Doppler-Radar nach dem HPRF-Modus arbeitet und daß dessen empfangene Signale mit der Phase ausgewertet werden.

8. Verfahren nach einem der vorhergehenden Ansprüche, dadurch gekennzeichnet, daß das Puls-Doppler-Radar als Bordradar in einem Luftfahrzeug ausgebildet wird.

## Claims

1. Method of distinguishing at least two targets with the aid of a Doppler pulse radar, wherein the radar signals reflected by at least one target are evaluated with respect to the distance direction and/or speed direction and the presence of one or more targets is concluded therefrom, characterised thereby

   - that in the radar signal reflected by at least one target the phase position thereof is evaluated,
   - that a mean phase position of the adjacent filter or of the adjacent distance store is determined therefrom,
   - that the deviations of the phase position of the adjacent filter or the adjacent distance store from the previously calculated mean phase position is determined and
   - that a multiple target situation is recognised insofar as the deviations of the phase position exceed an associated threshold value.

2. Method according to claim 1, characterised thereby that the threshold value is formed in dependence on the signal-to-noise ratio of the received signal after passage thereof through an evaluating filter.

3. Method according to claim 1 or claim 2, characterised thereby that the evaluating filter is a Gaussian filter.

4. Method according to one of the preceding claims, characterised thereby that for each Doppler range a mean phase position is formed in the adjacent Doppler filter.

5. Method according to one fo the preceding claims, characterised thereby that for each distance range a mean phase position is formed in the adjacent distance store.

6. Method according to one of the preceding claims, characterised thereby that the deviations of the phase positions relative to the calculated mean phase positions are evaluated in addition to the amplitude values, and that on the exceeding of an associated threshold the presence of a multiple target situation is concluded.

7. Method according to one of the preceding claims, characterised thereby that the Doppler pulse radar operates according to the HPRF mode and that the received signals thereof are evaluated by the phase.

8. Method according to one of the preceding claims, characterised thereby that the Doppler pulse radar is constructed as an on-board radar in an aircraft.

**Revendications**

1. Procédé pour la discrimination d'au moins deux cibles à l'aide d'un radar Doppler pulsé, les signaux de radar réfléchis par au moins une cible étant exploités en ce qui concerne la direction d'éloignement et/ou la direction de vitesse, et, à partir de cela, étant conclu sur la présence d'une ou de plusieurs cibles, caractérisé en ce

   - que dans le signal de radar réfléchi par au moins une cible, la relation de phase de celui-ci est exploitée,
   - qu'à partir de cela, une relation de phase moyenne du filtre voisin, ou bien de la porte d'éloignement voisine, est déterminée,
   - que les déviations de la relation de phase du filtre voisin, ou bien de la porte d'éloignement voisine, sont déterminées par la relation de phase moyenne calculée auparavant, et
   - qu'il est reconnu une situation à plusieurs cibles, pour autant que les déviations de la relation de phase franchissent une valeur de seuil associée.

2. Procédé selon la revendication 1, caractérisé en ce que la valeur de seuil est formée en dépendance du rapport signal/bruit du signal reçu, après la traversée par celui-ci d'un filtre d'évaluation.

3. Procédé selon la revendication 1 ou la revendication 2, caractérisé en ce que le filtre d'évaluation est constitué comme un filtre de Gauss.

4. Procédé selon une des précédentes revendications, caractérisé en ce que pour chaque zone Doppler, une relation de phase moyenne est formée dans le filtre Doppler voisin.

5. Procédé selon une des précédentes revendications, caractérisé en ce que pour chaque zone d'éloignement, une relation de phase moyenne est formée dans la porte d'éloignement voisine.

6. Procédé selon une des précédentes revendications, caractérisé en ce qu'en supplément aux valeurs d'amplitude, les déviations des relations de phase par rapport aux relations de phase moyennes calculées sont exploitées, et en ce que, lors du franchissement d'un seuil associé, il est conclu sur la présence d'une situation à plusieurs cibles.

7. Procédé selon une des précédentes revendications, caractérisé en ce que le radar Doppler pulsé travaille selon le mode à HPRF et en ce que les signaux reçus de celui-ci sont exploités avec la phase.

8. Procédé selon une des précédentes revendications, caractérisé en ce que le radar Doppler pulsé est constitué comme radar de bord dans un aéronef.

Entfernung R

R_u

$\Delta R$

R_b

Zeit
t

$\frac{1}{PRF}$

T_a {

Blindbereich

$\frac{PRT}{N_{FFT}}$
$\Delta v$

PRF
v_u

f
v

FIG.1

$|S_M(f)|$

1

$\frac{1}{\sqrt{2}}$

$-B_{tx}$        $+B_{tx}$        f

FIG.2

$S_m'(t)$

1

$\frac{1}{\sqrt{2}}$

T_{tx}        t

$T_{tx} = \frac{\ln 2}{\pi B_{tx}}$

FIG.3

13

$S(t)$

Breite eines Entfernungstores

1

$-0,25$      $+0,25$      $t/\mu$ sec

FIG. 4

$S(t)$

Hanning-Fenster

$$W\left(t+\frac{PRF}{2N_{FFT}}\right) = \cos^2 \pi \, \frac{PRF}{N_{FFT}} \cdot t$$

$t$

$\dfrac{N_{FFT}}{PRF}$

FIG. 5

$\dfrac{|S(f)|}{dB}$

$\Delta f_{3dB} = \dfrac{1,44 \; PRF}{N_{FFT}}$

0

$-20$

$-40$

$-60$

PRF      $f$

FIG. 6

FIG. 7

FIG.8

FIG.9

Amplitudenauswertung (Mehrzielbedingung)

zusätzlich Phasenauswertung

2 Abtastwerte

3 Abtastwerte

$|x(i)|$

Schwelle

i i+1 i+2   i

4 Abtastwerte

FIG. 10

FIG.11

FIG.12

FIG.13

FIG.14

FIG. 15

FIG. 16

Im{Σ}

ein Ziel

FIG.17

Σ₂

Σ₁

Re{Σ}

mehrere Ziele

Im{Σ}

ein Ziel

mehrere
Ziele

FIG.18

δₙ

Σ₁'

Σ₁

Re{Σ}

P_A [%]

FIG. 19 A

P_A [%]

FIG. 19 B

FIG. 20 A

FIG. 20 B

P_A [%]

FIG. 21A

Zielabstand [m]

P_A [%]

FIG. 21B

Zielabstand [m]

FIG. 22A

FIG. 22B